# EUROPEAN PATENT APPLICATION

(11) **EP 3 057 289 A1**
(43) Date of publication of application: **17.08.2016**
(21) Application number: 15305212.1
(22) Date of filing: 12.02.2015
(51) Int. Cl.: H04L 29/08, H04N 21/61, H04N 21/647

(54) **Method for real-time data streaming, a node, a system and a computer program product**

(71) Applicant: ALCATEL LUCENT, 92100 Boulogne-Billancourt (FR)
(72) Inventor: Jul, Eric, Dublin, 15 (IE); Franck, Franck, Dublin, 15 (IE)
(74) Representative: Bryers LLP

(57) **Abstract**

A method, in a content-centric network (CCN), for real-time data streaming, the method comprising receiving an interest packet over a link of the CCN from a requesting node for a requested data frame representing the next available frame for the streaming content, respective frames of the streaming content including a charge component representing a time for which a frame is to be stored at a receiving node of the CCN, determining whether the requested data frame is available at a first receiving node of the CCN, and if not, determining whether the requested data frame is available at any receiving nodes upstream of the first receiving node of the CCN terminating at a source for the streaming content, and providing the requested data frame to the requesting node from the receiving node.

## Description

### TECHNICAL FIELD

Aspects relate, in general to a method for real-time data streaming, a node, a system and a computer program product.

### BACKGROUND

Real-time Streaming or Live Streaming of content is common in today's internet, e.g., streaming live radio and television to computers and, increasingly important and prevalent, customers' smartphones and other connected devices.

Normal content streaming is merely the transfer of a large amount of data, typically a film for example, and may involve the use of content centric networking, which puts emphasis on content by making it directly addressable and routable.

Live Streaming of content differs in that each segment or frame of the stream must follow the previous one within a real-time limit, typically on the order of somewhat less than one second; if a segment is delayed further then it is preferable to drop the segment and continue with the stream in real-time. For example, if a consumer is live streaming a football game, the consumer usually prefers that the stream follows real-time.

Live streaming is therefore problematic in content centric networks because of mismatches between the rate at which streaming content is produced and the rate that it can be delivered to, and consumed by, customers' smartphones or other equipment for example.

### SUMMARY

According to an example, there is provided a method, in a content-centric network (CCN), for real-time data streaming, the method comprising receiving an interest packet over a link of the CCN from a requesting node for a requested data frame representing the next available frame for the streaming content, respective frames of the streaming content including a charge component representing a time for which a frame is to be stored at a receiving node of the CCN, determining whether the requested data frame is available at a first receiving node of the CCN, and if not, determining whether the requested data frame is available at any receiving nodes upstream of the first receiving node of the CCN terminating at a source for the streaming content, and providing the requested data frame to the requesting node from the receiving node. The value of the charge component can be a numeric or alphanumeric measure representing a time value for which the frame is to be stored at the receiving node of the CCN. In an example, a charge component represents a time value for a frame or segment indicating the length of time that the frame may be stored or cached, and which can decrease over time and/or as the frame traverses the CCN from a source of receiving node towards a requesting node or another receiving node.

The method can include storing a copy of the requested data frame at respective receiving nodes of the CCN at which the frame is not available between the receiving node providing the requested data frame and the requesting node. The copy of the requested data frame can be stored at a receiving node for a predetermined period of time commensurate with the charge component of the requested data frame. A charge component of a frame of the streaming content at a receiving node decays or decreases over time. That is, the value of a charge component can be modified as the frame in question to which the component relates or is linked traverses the network and/or is cached. The modification can reflect a decrease in the remaining time that a frame can be cached or stored in response to the passage of time in general and/or the traversal of the frame over the network.

The next available frame for the streaming content is the oldest of the available frames stored at a receiving node or at the source that has a frame number that is at least the same or greater than a frame number of the requested data frame. The method can further include storing an identifier of the requesting node and a sequence number of the requested data frame at a receiving node. The charge component of a frame of the streaming content decreases as the frame traverses the CCN.

According to an example, there is provided a node in a content centric network, the network operable to provide real-time data streaming of content, wherein the node is operable to receive an interest packet over a link of the CCN from a requesting node for a requested data frame representing the next available frame for the streaming content, respective frames of the streaming content including a charge component representing a time for which a frame is to be stored at the node, determine whether the requested data frame is available at the node, and if not, transmit an interest packet for the requested data frame to any receiving node upstream of the node terminating at a source for the streaming content, and provide the requested data frame to the requesting node. The node can store a frame of the streaming content for a predetermined period of time commensurate with the charge component of the frame. The node can provide the oldest of the available frames stored at the node that has a frame number that is at least the same or greater than a frame number of the requested data frame. The node can decrease the charge component of a frame stored at the node according to a predefined schedule. That is, the node can modify the value of the charge component to reflect a decrease in the remaining time that a frame can be cached or stored in response to the passage of time in general and/or the traversal of the frame over the network.

According to an example, there is provided a system for providing streamed content across a content centric network, the system including at least one receiving node operable to receive an interest packet over a link of the system from a requesting node for a requested data frame representing the next available frame for the streaming content, respective frames of the streaming content including a charge component representing a time for which a frame is to be stored at the node; wherein the node is operable to determine whether the requested data frame is available at the node, and if not, transmit an interest packet for the requested data frame to any receiving node upstream of the node terminating at a source for the streaming content; and provide the requested data frame to the requesting node. The system can include a source node for the streaming content upstream of the or each receiving node of the system.

According to an example, there is provided a computer program product, comprising a computer usable medium having computer readable program code embodied therein, said computer readable program code adapted to be executed to implement a method as provided herein.

### BRIEF DESCRIPTION OF THE DRAWINGS

Embodiments will now be described, by way of example only, with reference to the accompanying drawings, in which:
Figure 1 is a schematic representation of a traditional method for providing real-time streaming;
Figure 2 is a schematic representation of a traditional method for providing real-time streaming in the event that there are multiple consumers;
Figure 3 is a schematic representation of a traditional method for providing real-time streaming in a content centric network;
Figure 4 is a schematic representation of a traditional method for providing real-time streaming in a content centric network;
Figure 5 is a schematic representation of a system according to an example;
Figure 6 is a schematic representation of a system according to an example;
Figure 7 is a schematic representation of a system according to an example; and
Figure 8 is a schematic representation of a system according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

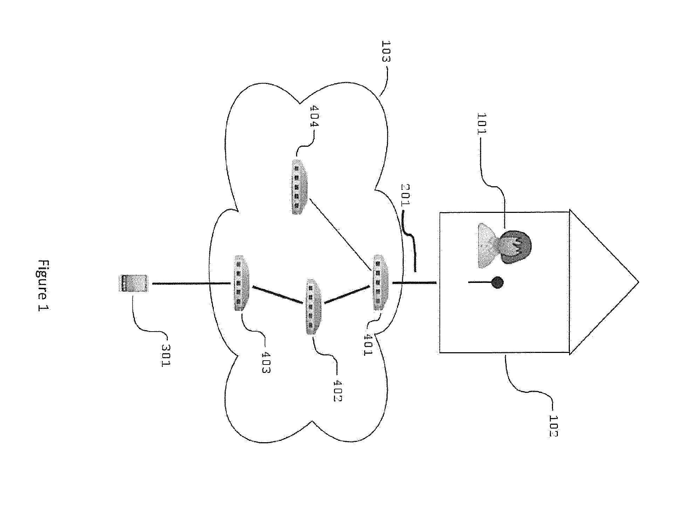

Figure 1 is a schematic representation of a traditional method for providing real-time streaming. The method illustrated can be used by, for example, radio stations and/or television content providers. When a consumer device 301 subscribes to, for example, a radio stream from, e.g., a speaker 101 at a remote site 102 such as a radio station, a point-to-point TCP/IP connection 201 is established that connects the consumer with the remote site across the internet 103 that routes the connection via routers 401-404 that are connected via network links.

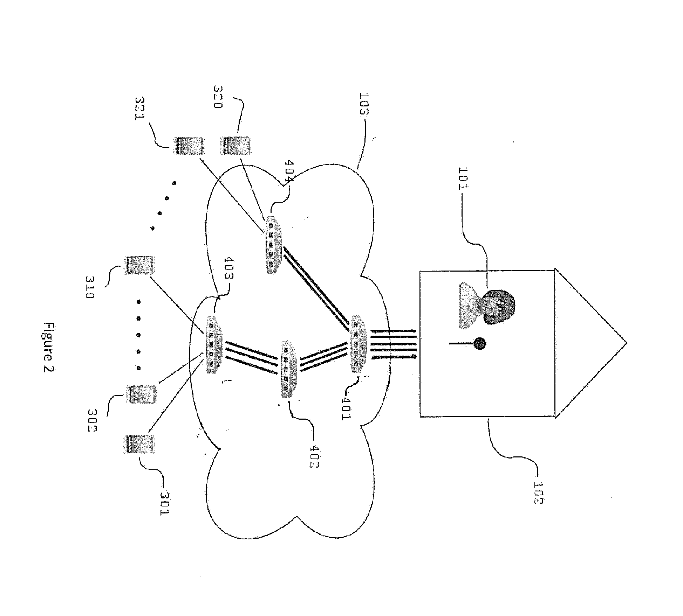

Figure 2 is a schematic representation of a traditional method for providing real-time streaming in the event that there are multiple consumers, 301 to 320. Each consumer, 301-320 is streaming from the same source 101 in the example of figure 2. Accordingly, a point-to-point TCP/IP connection is established for each consumer device 301-320. If several of these consumers are connected to the same small part of the network, as illustrated in Figure 2, then each segment of the stream will be transmitted across the same links multiple times, once for each of the consumers.

In a content centric network (CCN), streaming of content can be performed using communication between devices based on named data or data portions instead of IP addresses. Content centric networking involves the exchange of content request messages (called Interests) and content return messages (called Content Objects which can be in the form of data frames for content). That is, content consumers request a content stream by naming the content so that a CCN implementation can deliver the stream to multiple consumers in a much more efficient way. A CCN in which consumers request a content stream by naming the content was described by Van Jacobson, Diana K. Smetters, Nicholas H. Briggs, Michael F. Plass, Paul Stewart, James D. Thornton, and Rebecca L. Braynard in 2009, VoCCN: voice-over content-centric networks, In Proceedings of the 2009 workshop on Re-architecting the internet (ReArch '09). ACM, New York, NY, USA, 1-6.

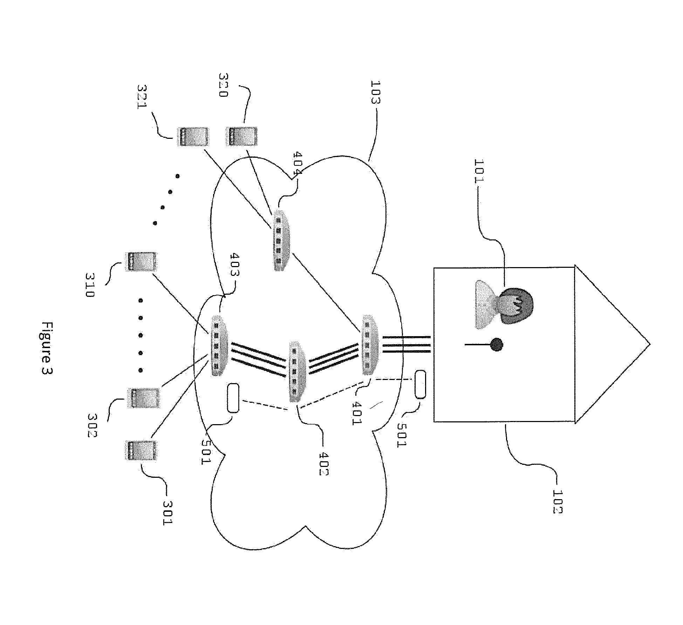

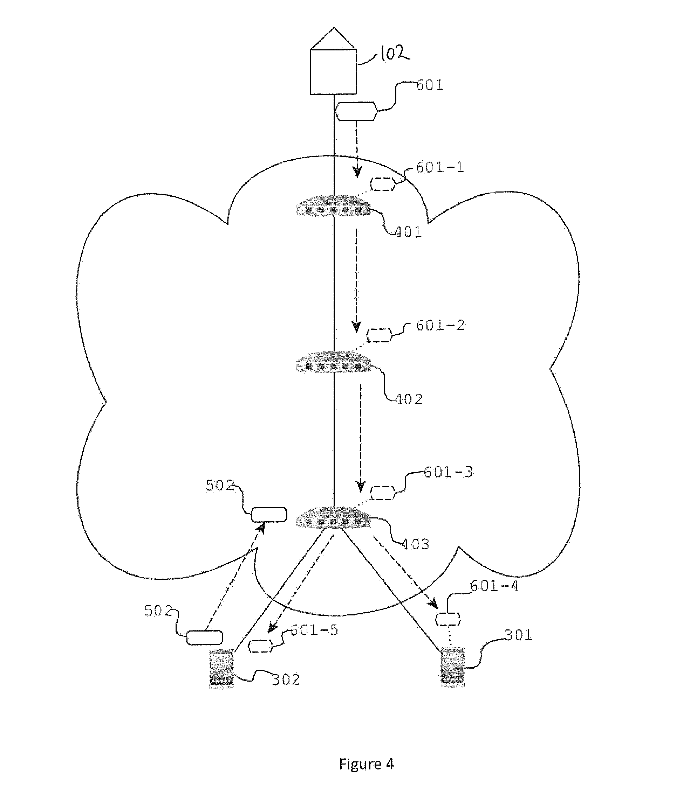

Figures 3 and 4 are schematic representations of a traditional method for providing real-time streaming in a content centric network. Each consumer sends an interest 501 for a stream back to the source 102 of the stream. When a consumer sends an interest that subsequently arrives at the source site, the site returns a description of the stream including a name for each of the segments making up the stream (the stream segments are the stream name and a sequence number). The consumer generates the names of the segment by appending a sequence number to the name.

With reference to figure 4, the consumer can then request a first segment or frame 601 of the content by sending an interest to the site 102 that then returns the first segment 601 back to the first consumer device 301. Along the way from the source site 102 to the consumer device 301 each segment passes through multiple network routers 401-403. Each of these routers can decide to cache a copy of the first segment 601. For example, as depicted in figure 4, router 401 retains a copy 601 - 1, router 402 retains a copy 601-2, and router 403 retains a copy 601-3 and a copy 601-4 is delivered to the consumer device 301.

Subsequently, another consumer device 302 requests the same stream by sending an interest 502 towards the source site 102. However, when the interest 502 reaches network node 403, that network node notes that it has the first segment of the stream 601 cached in the form of a local copy 601-3, and the node can thus deliver the segment to device 302, which then receives the segment 601-5.

That is, every segment gets delivered, which is advantageous for streaming non-real-time data because all the data is received and is accurate. However, this can be a problem when there is a mismatch between the rate at which streaming content is produced and the rate that it can be delivered to, and consumed by, customers' devices such as smartphones which may have limited bandwidth and/or bandwidth variations as a result of, for example, device mobility.

Typically, this can be tackled by dropping or skipping segments or frames of a content stream so that the device can 'catch up'. If a single segment is skipped, this may not even be noticeable to the consumer as each segment represents a short time interval and the device may be able to mitigate the gap by interpolating voice/video across the gap. Alternatively, if the device reports that it is falling behind, the content producer can compress the data representing the content more, e.g., by using a more lossy compression algorithm that produces shorter segments, or (with video) to use lower resolution. A combination of the two may be used.

In a content-centric network according to an example there are two basic types of data packets which can be used for content delivery. The first is an interest packet (which is a request or message for a named item of content), the second is the data (which is the actual content to be delivered in response to an interest packet and which form segments or frames of the content, e.g. a segment or frame may be a frame of a television broadcast for example). A charge component can be associated with each of these content-related packets transmitted within the network. Data segments can have positive charges. In addition, links and/or nodes in the network (such as communication paths between two network nodes) can have a resistance component of function associated with one or both directions of data travel to and from a node and/or between two network nodes.

According to an example, a charge component for a frame or segment of streaming content represents a time for which that frame is to be stored at a receiving node of the CCN. The value of a charge component may be depleted as a frame traverses the CCN. Accordingly, a charge component can be used as a mechanism to indicate a time for which a frame or segment of content is to be stored or cached at a receiving node of the network before it is deleted or otherwise made unavailable to a requesting node of the network. As such, a charge component is a time value that represents a time period that i) decreases as a frame with which the charge component is associated traverses the network - that is, as the frame travels from node to node in a network from a source node to a receiving node or requesting node; and ii) decreases with time at the node at which the frame in question is stored or cached. The rate at which the value of a charge component can decrease for i) and ii) noted above can be the same or different. The rate or rates at which the value of a charge component can decrease can be linear or can vary according to any predefined function. For example, the value of a charge component can decrease as a frame traverses the network so that the time for which the frame is to be stored at a receiving node is reduced by a predefined number of seconds or minutes each time a node is traversed, and the value of the charge component can be updated accordingly as the frame progresses through the network. Whilst cached, the value of a charge component can be modified in line with a predefined relationship, whereby to progressively decrease the time that the frame is to be stored at the node. For example, the value of the charge component may be modified every second or minute that a frame is cached to reflect a decrease in the remaining amount of time that the frame is to be stored. In a simple example, for each minute that passes, the value of the charge component may be decremented by one minute thereby reducing the amount of time that the frame is to be stored at the node by one minute. At a predefined minimum value for the charge component, which may correspond to a time value of zero for example, the frame can be deleted or otherwise made unavailable at the node.

In simple terms, a charge component merely acts as a timer or time value for a frame segment, which is continually counting down or decreasing and which may be decremented by a predefined amount each time the frame traverses or arrives at a network node.

A relationship to decreases the value of a charge component of a traversing frame and/or decrease the value of a charge component of a cached frame can be stored at a node, and may be updated periodically as desired in order to react to changes in streamed content and/or storage requirements and so on.

In an example, a resistance function or component can be the predefined relationship that is used to decrease the value of a charge component for a frame as it traverses the network and/or as it is cached at a node. For example, a resistance function at a network node can be used to decrease the value of a charge component for a frame cached at the node by a predefined amount every one second or minute and so on. Similarly, a resistance function of a node can be used to decrease the value of a charge component for a frame that traverses the node (i.e. there is frame ingress at an input port of the node from one link, and frame egress at an output port of the node to a link connected to another node). Accordingly, a resistance function can simply be a function, linear or otherwise, that is used to decrease the value of a charge component of a frame or segment.

Nodes within the network may adjust the resistance in response to, for example, congestion, bandwidth utilization, resource utilization, etc. When a packet with a charge travels across a link from a source node to a requesting or receiving node the magnitude of the charge will decrease, dependent on the resistance (as defined by the resistance function) of the node or link. In an example, the further a frame travels from its source, the 'weaker' its charge (the value of the charge component) will become as the magnitude tends towards zero or a 'neutral' charge. That is, a resistance function is geared to decrease the value of a charge component of a frame as the frame moves from a source node to a requesting node of the network. Conversely, the function (or another resistance function) can be used to increase the value of a charge component of a frame as it traverses the network in the opposite direction.

When a requesting node in the network issues an interest packet, it follows a path to the next node upstream of the requesting node that will typically be a receiving node (which may in some cases be a source node). Typically, there will be multiple receiving nodes between a requesting node and a content source node, thereby forming the content centric network. As a data packet is routed, any node may make a copy of it and store it for later delivery in response to other interest packets.

Thus, a charge value associated with a frame or segment of content is not permanent and decays with time and decreases, exhausts or extinguishes when the charge goes below a minimum threshold level or reaches zero. The rate of decay may be linear or exponential or any other decay function. Thus, content (or parts thereof such as the content segments) can be given a maximum age that it can be stored for. A charge value for a data segment can be stored in a header of the data segment for example. In an example, a charge component of a frame or segment of is a numeric or alphanumeric value. Similarly, a resistance associated with a node or link in a CCN is a numeric or alphanumeric value.

Therefore, according to an example, a method, in a content-centric network (CCN), for real-time data streaming uses a charge routing protocol for content frames (segments) in a system in which the next available frame for the streaming content, which is the oldest of the available frames stored at a receiving node or at the source, is provided to a requesting node. The latest frame for content is requested using an interest rather than requesting a specific frame.

In an example, the latest segment can be requested by sending a special marker, such as "#" for example, instead of the sequence number that requests the most recent frame on a stream. Accordingly, if a device has fallen behind a real-time stream, due to bandwidth issues for example, it will receive the most recent segment of a stream and thus be able to keep up with the real-time broadcast, albeit with small (or larger) drops in the transmission (as segments often each represent less than a 1/10^{th} of a second of speech, the loss of a single segment is not necessarily noticeable).

In an example, the interest from a requesting node includes an indication of the next segment that the requesting node would like to have, i.e., the interest represents a request not merely for the latest segment, but rather the oldest segment past the latest received segment.

A charge value is set on each frame sent from a source node of the system according to an example. The charge value represents a period of time for which the frame in question is to be stored at a receiving node of the system, and in an example the charge value is decreased as the frame traverses receiving nodes, such as routers for example, indicating that the node is further from the source than the previous node. In an example, as a frame traverses nodes of the system it can be cached at the nodes at which no copy of the frame in question is stored.

When a node caches a frame, the charge associated with the frame is also stored and decays over time. This allows control over how long frames are cached at nodes, including that the further away from the source a node is, the shorter is the time that the frame is cached.

That is, a frame becomes 'older' the further it travels or traverses the system. Therefore requesting the oldest of the non-expired frames makes sense as charge routing provides a mechanism to have frames expire depending on the distance to the source and the age of the frame.

In an example, a value for a charge component can be reduced or can decay or decrease based on a percentage change of the value, rather than a numerical reduction for example.

According to an example, a CCN system is provided in which charge routing is used with a mechanism to request the next available frame for streaming content desired by a requesting node of the system. Each frame or segment for content provided by the system is assigned a sequential sequence number that the segment carries with it when transmitted and cached as in the traditional CCN way of handling streams.

In an example, the mechanism used provides notation that can be used by a requesting node of the system to express an interest for particular content. A frame of content can be identified using a frame number that represents a sequence number for the frames. For example, if some streamed content is a live broadcast of a sporting event, each frame of the broadcast can be identified by a frame number representing a sequence number for the frames of the content and which enable a receiving node to identify and request the next desired frame for some content.

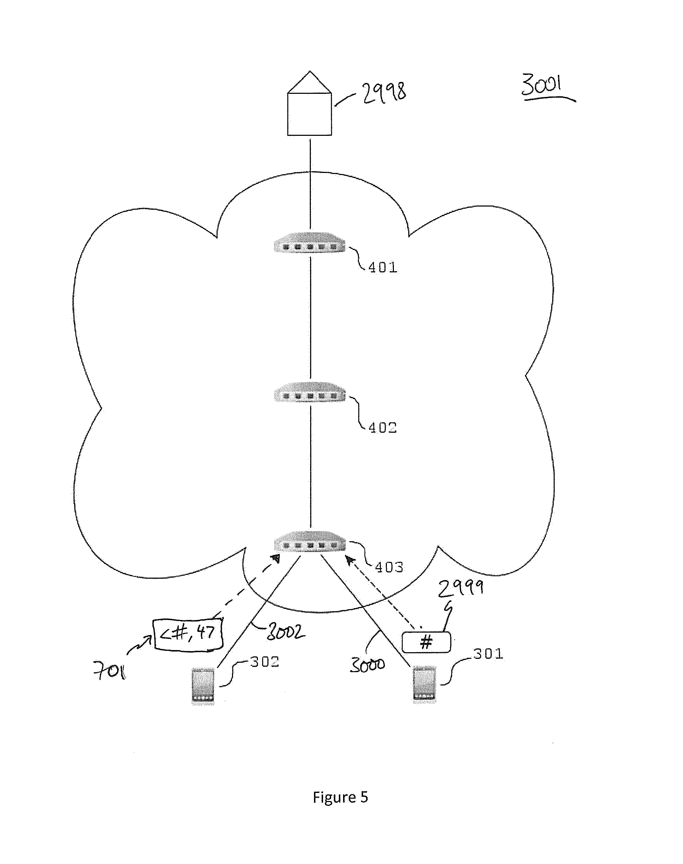

Figure 5 is a schematic representation of a system according to an example. A device 30I, which is a requesting node of the system, requests a frame (or segment) of real-time streamed content. The frame is requested using an interest message or packet 2999 that is sent over a link 3000 of the system 3001. The interest packet is for a requested data frame representing the next available frame for the streaming content. That is, using "#" notation for example, the device 301 requests the next available frame for the streaming content that is the oldest of the available frames stored at a receiving node 401-403 or at the source 2998 of the system 3001.

A requesting node can add a next sequence number requested to the request. For example, if the device 302 has most recently received the third segment of a stream, it can send a request 701 for <#, 4> indicating that it wants the oldest of the most recent segments that has sequence number of at least 4. That is, it is requesting the frame that has a frame number that is at least the same or greater than a frame number of the requested data frame, in this case 4. As the request traverses back toward the source site 2998 it will either reach a cache at a receiving node 401-403 that has a recent segment or will make it all the way to the source (i.e., the case where there is no recent segment cached on the way).

The source 2998 may be another cache as it caches the segments until their charge has dispersed. The first cache that has a segment for the content in question will then send the least recent segment that has a sequence number of 4 or more. If the cache does not have such a segment, it stores the request including the ID of the requesting device 301, 302, and, if it has not done so before, forwards the request toward the source site as to request another segment of the stream. An upstream node will receive the request, and so the request may not make it to the source if such an upstream node has a copy of segment that meets the requested criteria. For example, if node 403 does not have a recent segment for the requested content, the requested is passed upstream to node 402, which is the next node in the chain towards the source of the content 2998. Node 402 may have a recent segment that fulfills the requirements, in which case this is passed to node 403, which can store a copy, and is passed to the requesting node 301 or 302. In the event that node 402 does not have a recent segment of the content the request is passed to node 401 and so on, until the source 2998 is reached.

Continuing the example, where an interest packet is in the form <#,4>, indicating that he requesting node requests the oldest of the most recent segments that has sequence number of at least 4 for desired content, consider the case in which the request traverses to a source node in a system.

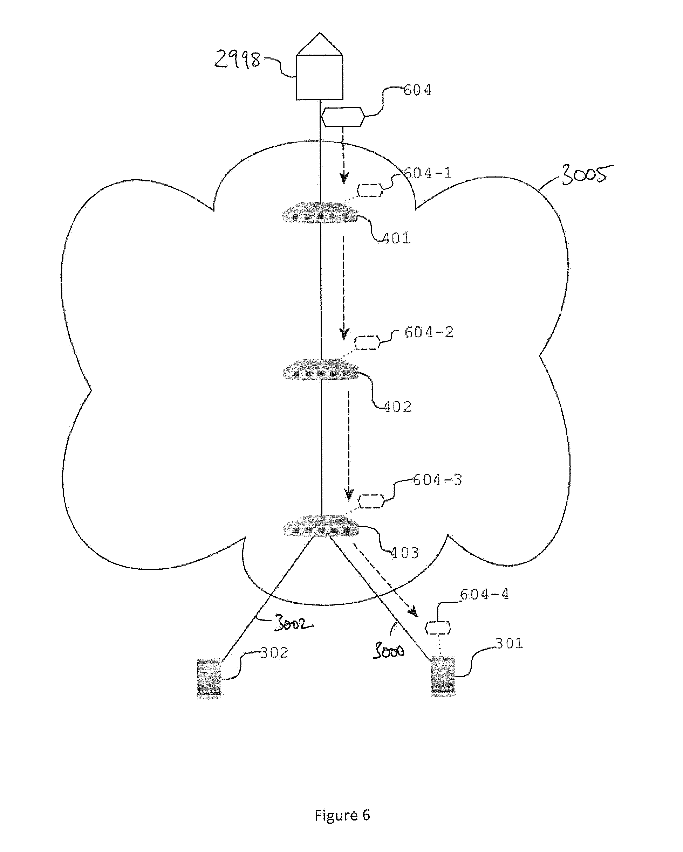

In this connection, figure 6 is a schematic representation of a system according to an example. A request <#,4> traverses to source 2998 because no segment meeting the specified parameters for the requested content is provided at any of nodes 401-403 of the CCN 3005 of figure 6.

Accordingly, the 4^{th} segment 604 of the content is produced at or provided from the source site 2998 and gets sent back in the direction of all those nodes of network 3005 that have requested it. Thus, as it traverses the nodes of the network, a copy 604-1 is cached at node 401, a copy 604-2 is cached at node 402 and a copy 604-3, is cached at node 403. When it arrives at node 403, that node will locate the stored request from device 301 and send a copy of the cached 4^{th} segment 604-3 to the device 301 that receives it 604-4.

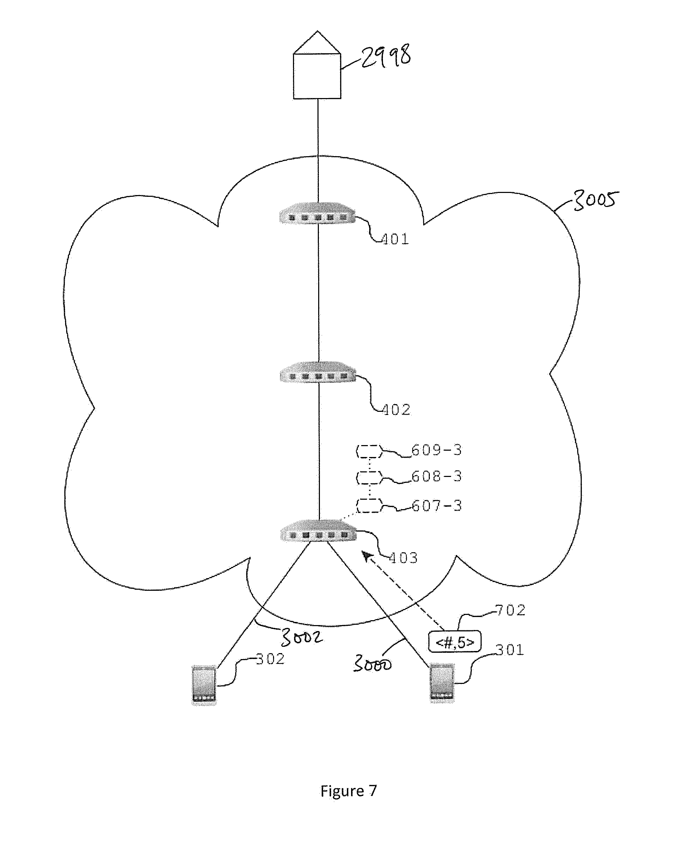

Now following this, consider the situation where the device 301 falls behind a live stream of content. In this connection, figure 7 is a schematic representation of a system according to an example.

In the example of figure 7, the device is slow for a period (e.g. has reduced bandwidth for a period of time and so on) and then proceeds to send an interest packet 702 for a content frame <#, 5> at a time when the charge for the next two (for example) segments, namely the 5^{th} and the 6^{th} segments, have decayed at the node 403 and thus have been discarded (deleted) by that node. The node has the 7^{th}, 8^{th}, and 9^{th} segments 607, 608, and 609. Because the request is for the oldest segment no older than the 5^{th} segment, node 403 returns the 7^{th} segment 607-3, to device 301.

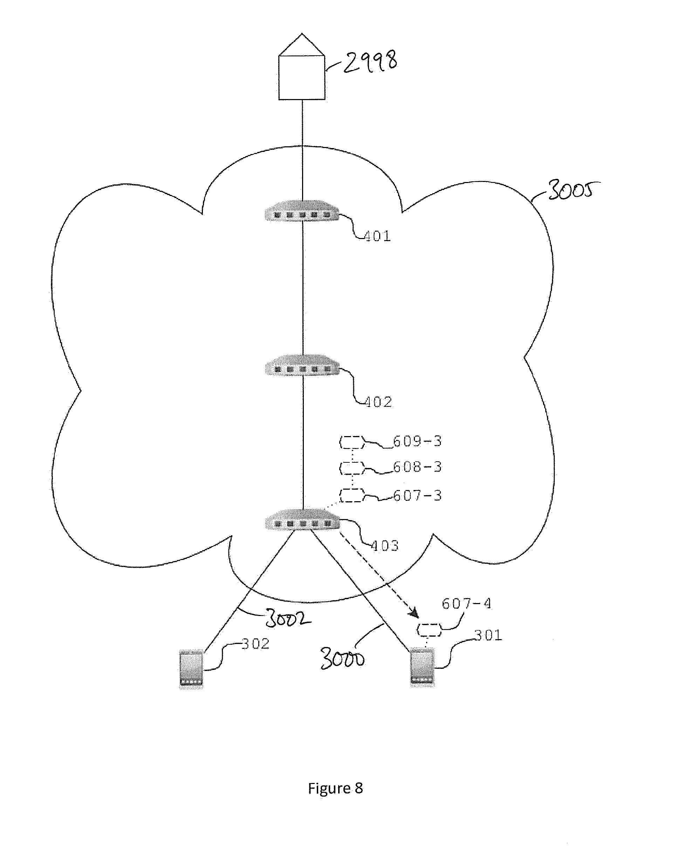

Figure 8 is a schematic representation of a system according to an example. With reference to figure 7, the device 301 receives a copy of the 7^{th} segment 607-4 and thereby catches up to the "tail" of the still current segments 7, 8, and 9 of the content in question.

Therefore, according to an example, charge routing in which a charge value is provided for use with a segment or frame of live-streamed content, provides an automatic and distributed way to provide decisions concerning which segments to drop, and in a way that is adaptive quickly and furthermore is adaptive to the distance from the source and how slow the consumer is. The method also supplies as many segments as possible. Using charge routing, each consumer automatically adapts the number of packets dropped as to maintain the real-time streaming.

The advantage is that a maximum number of possible segments are delivered and that the source, by setting charges, can control the extent of dropping packages. Thus, as opposed to previous CCN solutions, all the segments possible can be delivered, but no more: the scheme drops packets only when necessary. The solution is flexible and adaptive - not just in general but the dropped packet depends on the consumer, so that the method delivers segments depending on the abilities of each individual consumer device. The methods delivers in a timely fashion segments to every consumer in accordance with whatever speed they can consume the segments.

A person of skill in the art would readily recognize that steps of various above-described methods can be performed by programmed computers. Herein, some examples are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The examples are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody these principles and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a content-centric network (CCN), for real-time data streaming, the method comprising:
receiving an interest packet over a link of the CCN from a requesting node for a requested data frame representing the next available frame for the streaming content, respective frames of the streaming content including a charge component representing a time for which a frame is to be stored at a receiving node of the CCN;
determining whether the requested data frame is available at a first receiving node of the CCN, and if not, determining whether the requested data frame is available at any receiving nodes upstream of the first receiving node of the CCN terminating at a source for the streaming content; and
providing the requested data frame to the requesting node from the receiving node.

2. A method as claimed in claim 1, wherein the value of the charge component is a numeric or alphanumeric measure representing a time value for which the frame is to be stored at the receiving node of the CCN.

3. A method as claimed in claim 1 or 2, further including storing a copy of the requested data frame at respective receiving nodes of the CCN at which the frame is not available between the receiving node providing the requested data frame and the requesting node.

4. A method as claimed in any preceding claim, wherein the copy of the requested data frame is stored at a receiving node for a predetermined period of time commensurate with the charge component of the requested data frame.

5. A method as claimed in any preceding claim, wherein a charge component of a frame of the streaming content at a receiving node decays or decreases over time.

6. A method as claimed in any preceding claim, wherein the next available frame for the streaming content is the oldest of the available frames stored at a receiving node or at the source that has a frame number that is at least the same or greater than a frame number of the requested data frame.

7. A method as claimed in any preceding claim, further including storing an identifier of the requesting node and a sequence number of the requested data frame at a receiving node.

8. A method as claimed in any preceding claim, wherein the charge component of a frame of the streaming content decreases as the frame traverses the CCN.

9. A node in a content centric network, the network operable to provide real-time data streaming of content, wherein the node is operable to:
receive an interest packet over a link of the CCN from a requesting node for a requested data frame representing the next available frame for the streaming content, respective frames of the streaming content including a charge component representing a time for which a frame is to be stored at the node;
determine whether the requested data frame is available at the node, and if not, transmit an interest packet for the requested data frame to any receiving node upstream of the node terminating at a source for the streaming content; and
provide the requested data frame to the requesting node.

10. A node as claimed in claim 9, wherein the node is operable to store a frame of the streaming content for a predetermined period of time commensurate with the charge component of the frame.

11. A node as claimed in any of claims 8 to 10, wherein the node is operable to provide the oldest of the available frames stored at the node that has a frame number that is at least the same or greater than a frame number of the requested data frame.

12. A node as claimed in any of claims 8 to 11, wherein the node is operable to decrease the charge component of a frame stored at the node according to a predefined schedule.

13. A system for providing streamed content across a content centric network, the system including:
at least one receiving node operable to receive an interest packet over a link of the system from a requesting node for a requested data frame representing the next available frame for the streaming content, respective frames of the streaming content including a charge component representing a time for which a frame is to be stored at the node; wherein the node is operable to determine whether the requested data frame is available at the node, and if not, transmit an interest packet for the requested data frame to any receiving node upstream of the node terminating at a source for the streaming content; and provide the requested data frame to the requesting node.

14. A system as claimed in claim 13, further including a source node for the streaming content upstream of the or each receiving node of the system.

15. A computer program product, comprising a computer usable medium having computer readable program code embodied therein, said computer readable program code adapted to be executed to implement a method as claimed in any of claims 1 to 8.

## Amended claims

### Amended claims in accordance with Rule 137(2) EPC.

1. A method, in a content-centric network, CCN, for real-time data streaming, the method comprising:
receiving an interest packet over a link of the CCN from a requesting node for a requested data frame representing the next available frame for the streaming content, the next available frame being the oldest of the available frames stored at a receiving node or at a source that has a frame number that is at least the same or greater than a frame number of the requested data frame, respective frames of the streaming content including a charge component representing a time for which a frame is to be stored at a receiving node of the CCN that decreases as the frame traverses the CCN;
determining whether the requested data frame is available at a first receiving node of the CCN, and if not, determining whether the requested data frame is available at respective receiving nodes upstream of the first receiving node of the CCN terminating at a source for the streaming content; and
providing the requested data frame to the requesting node from the receiving node.

2. A method as claimed in claim 1, wherein the value of the charge component is a numeric or alphanumeric measure representing a time value for which the frame is to be stored at the receiving node of the CCN.

3. A method as claimed in claim 1 or 2, further including storing a copy of the requested data frame at respective receiving nodes of the CCN at which the frame is not available between the receiving node providing the requested data frame and the requesting node.

4. A method as claimed in any preceding claim, wherein the copy of the requested data frame is stored at a receiving node for a predetermined period of time commensurate with the charge component of the requested data frame.

5. A method as claimed in any preceding claim, wherein a charge component of a frame of the streaming content at a receiving node decays or decreases over time.

6. A method as claimed in any preceding claim, further including storing an identifier of the requesting node and a sequence number of the requested data frame at a receiving node.

7. A node (403) in a content centric network, the network operable to provide real-time data streaming of content, wherein the node (403) is operable to:
receive an interest packet (501; 502; 701; 702; 2999) over a link of the CCN from a requesting node (301; 302) for a requested data frame representing the next available frame for the streaming content, the next available frame being the oldest of the available frames stored at a receiving node or at a source (102) that has a frame number that is at least the same or greater than a frame number of the requested data frame, respective frames of the streaming content including a charge component representing a time for which a frame is to be stored at the node that decreases as the frame traverses the CCN;
determine whether the requested data frame is available at the node (403), and if not, transmit an interest packet for the requested data frame to a receiving node upstream of the node terminating at a source (102) for the streaming content; and
provide the requested data frame to the requesting node (301; 302).

8. A node (403) as claimed in claim 7, wherein the node is operable to store a frame of the streaming content for a predetermined period of time commensurate with the charge component of the frame.

9. A node (403) as claimed in any of claims 7 to 8, wherein the node is operable to decrease the charge component of a frame stored at the node according to a predefined schedule.

10. A system for providing streamed content across a content centric network, the system including:
at least one receiving node (403) operable to receive an interest packet (501; 502; 701; 702; 2999) over a link of the system from a requesting node (301; 302) for a requested data frame representing the next available frame for the streaming content, the next available frame being the oldest of the available frames stored at a receiving node or at a source that has a frame number that is at least the same or greater than a frame number of the requested data frame, respective frames of the streaming content including a charge component representing a time for which a frame is to be stored at the node that decreases as the frame traverses the CCN; wherein the node (403) is operable to determine whether the requested data frame is available at the node, and if not, transmit an interest packet for the requested data frame to a receiving node upstream of the node terminating at a source (102) for the streaming content; and provide the requested data frame to the requesting node.

11. A system as claimed in claim 10, further including a source node (102) for the streaming content upstream of the or each receiving node of the system.

12. A computer program product, comprising a computer usable medium having computer readable program code embodied therein, said computer readable program code adapted to be executed to implement a method as claimed in any of claims I to 6.
